# EUROPÄISCHE PATENTANMELDUNG

(11) **EP 0 795 518 A1**
(43) Veröffentlichungstag der Anmeldung: **17.09.1997**
(21) Anmeldenummer: 97104352.6
(22) Anmeldetag: 14.03.1997
(51) Int. Cl.: C03B 3/02, C03B 5/00, C03C 1/00, C03C 11/00, G21F 9/28

(54) **Verfahren zur Verarbeitung von mit Leicht-, Schwermetallen, deren Verbindungen und toxischen sowie radioaktiven Stoffen belasteten Gläsern**

(30) Priorität: 15.03.1996 DE 19610233
(71) Anmelder: GBSH mbH Gesellschaft für Beratung, Service und Handel, 06905 Bad Schmiedeberg (DE); ABS, Anhaltinische Braunkohle Sanierungsgesellschaft mbH, 06749 Bitterfeld (DE)
(72) Erfinder: Selig, Harald, 06766 Wolfen (DE)
(74) Vertreter: Köhler, Manfred, Dipl.-Ing.(FH)

(57) **Zusammenfassung**

Die Erfindung betrifft ein Verfahren zur Verarbeitung von durch mit Leicht- bzw. Schwermetallen und deren Verbindungen, toxischen Stoffen oder anderen Verbindungen sowie radioaktiven Materialien und anderen Substanzen belasteten Gläsern, deren Weiterverarbeitung mit bisher bekannten Mitteln weitestgehend nicht ohne Umweltbelastungen zu realisieren sind.

## Beschreibung

Die Erfindung betrifft ein Verfahren zur Verarbeitung von Gläsern mit Belastung insbesondere mit Leicht- bzw. Schwermetallen und deren Verbindungen, toxischen Stoffen oder anderen Verbindungen sowie radioaktiven Materialien, deren Weiterverarbeitung mit bisher bekannten Mitteln weitestgehend nicht ohne Umweltbelastungen zu realisieren sind.
Belastete Gläser fallen in immer größer werdender Menge an, und es fällt immer schwerer, diese zu entsorgen bzw. so weiterzuverarbeiten, daß eine Umweltbelastung vermieden wird.

So sind Verfahren zur Verarbeitung von belasteten Gläsern wie bspw. Fernsehbildröhren oder Computermonitoren bekannt, nach denen, wie in der OS 4 426 197 beschrieben, eine Verwendung einer Schutzvorrichtung aus zerkleinerten Bildröhren vorgeschlagen wird.

In der OS 4 038 637 ist die Herstellung von Schaumglaskörpern unter Verwendung des zerkleinerten Glases von Entladungslampen beschrieben.

Die DE-PS 4 339 176 beschreibt die Verwendung von Glasmehl aus der optischen Industrie oder mineralischer industrieller Abfallstoffe in verglasten, geblähten Granulaten und die OS 3 841 219 die Behandlung von mit Schwermetallen belastetem Müll, hier allerdings zur Verwendung im Straßenbau.

Nachteilig bei allen bekannten Verfahren ist die Belastung der Umwelt bei der Verarbeitung der belasteten Gläser während des Prozesses der Weiterverarbeitung, da hier Schadstoffe an die Umwelt abgegeben werden bzw. deren Entweichen durch den Einsatz von Filtern verhindert wird, wobei die dabei gesammelten Filterstoffe entweder in den Prozeß zurückgeführt oder extra entsorgt werden müssen.

Aufgabe der Erfindung ist es, die bekannten Verfahren dahingehend zu verbessern, daß die genannten, die Umwelt belastenden Bestandteile in einer Glasschmelze eingeschmolzen und/ oder chemisch umgewandelt, gelöst oder gar zersetzt werden unter Beachtung minimaler Freisetzung von umweltschädlichen Stoffen.

Erfindungsgemäß wird das Verfahren in folgender Weise ausgestaltet:

Die einzuschmelzenden Gläser mit Belastung, insbesondere mit Leicht- bzw. Schwermetallen und deren Verbindungen, toxischen Stoffen oder anderen Verbindungen sowie radioaktiven Materialien werden gleichmäßig einem Extruder, welcher durch die kontinuierliche Zuführung der einzuschmelzenden Stoffe auf seiner einen Seite und durch die ebenfalls kontinuierliche Abführung der Schmelze, Lösung, Emulsion oder des Gemisches auf seiner anderen Seite ein geschlossenes System bildet, zugegeben und in diesem, unabhängig davon, ob die Leicht- bzw. Schwermetalle und deren Verbindungen sowie radioaktive Materialien, zu Beginn des Aufschmelzvorganges getrennt, einzeln oder zusammen an einer oder verschiedenen Stellen des Extruders zugegeben werden, auf bzw. eingeschmolzen oder zu einer chemischen Reaktion gebracht werden.

Dabei wird das Aufschmelzen durch die Addition der durch die Scherkräfte sowie durch Aneinanderreiben und Kneten der eingesetzten Materialpartikel entstehenden Reibungswärme, der Reaktionswärme, der Lösungswärme und einer zusätzlich zugeführten Wärme in Höhe der Differenz zu der Temperatur, welche zum Umwandeln von Glasstücken bzw. -Pulver zur Glasschmelze bzw. zum Auslösen einer chemischen Reaktion nötig ist, erreicht.

In dem erfindungsgemäßen Verfahren können dabei Gläser mit allen chemischen Verbindungen eingeschmolzen werden, die durch eine chemische Reaktion oder durch Auf- bzw. Einschmelzen ihre Struktur verändern, unabhängig davon, ob die unterschiedlichen Stoffe vor dem Schmelzprozeß bzw. Reaktionsprozeß verbunden waren, wie bspw. Bildröhren oder Monitore, oder vor der Zuführung zum Extruder vermischt werden.

Dabei beschränkt sich die Möglichkeit einer Emission umweltschädlicher Stoffe ausschließlich auf den Füllbereich des Extruders, einer eventuell vorhandenen Entlüftung bzw. auf das Entweichen der flüssigen Glasschmelze. Durch die örtlich begrenzte Freisetzung ist eine gezielte Beseitigung der Reststoffe mit minimalem Aufwand möglich

Nachfolgend soll das erfindungsgemäße Verfahren anhand von besonderen Ausgestaltungen näher erläutert werden:

Die einzuschmelzenden Gläser werden, abhängig von ihrem Volumen, ungebrochen, gebrochen oder pulverisiert einem Extruder zugegeben und in diesem auf- bzw. eingeschmolzen.

Dabei werden die zugegebenen Stoffe mit einander vermischt, wodurch diese miteinander reagieren und andere Verbindungen ergeben können.

Eine weitere Ausgestaltung des erfindungsgemäßen Verfahrens besteht darin, daß zusätzlich zu den einzuschmelzenden belasteten Gläsern Glaspulver bzw. Glasstücke, Mineralien und Mischsilikate als zusätzliche Glsabildner zugegeben werden, unabhängig ob diese erst im Extruder aufgewärmt werden, oder diese Masse vor der Zuführung in den Extruder so weit erwärmt wird, daß sie fließfähig wird und diese Masse nach Zugabe in den Extruder mit den einzuschmelzenden Materialien vermischt wird.

Weitere Ausgestaltungen des erfindungsgemäßen Verfahrens bestehen darin,
- daß bestimmte Materialien und Verunreinigungen bei der Herstellung von Schaum glas gezielt als Treibmittel eingesetzt werden
- daß radioaktive Materialien in Röntgenschutzgläser wie wolframoxid-, bleioxid- oder wismutoxidhaltige Gläser eingegossen werden
- daß toxische Stoffe bzw. andere Komponenten durch gezielte chemische Zusätze wie bspw. Oxidations- bzw. Reduktionsmittel oder Katalysatoren umgewandelt werden.

Eine besonders vorteilhafte Ausgestaltung der erfindungsgemäßen Lösug besteht darin, daß in das Verfahren andere Substanzen zusätzlich eingegeben und mit eingeschmolzen werden.

## Patentansprüche

1. Verfahren zur Verarbeitung von durch mit Leicht- bzw. Schwermetallen und deren Verbindungen, toxischen Stoffen oder anderen Verbindungen sowie radioaktiven Materialien und anderen Substanzen belasteten Gläsern, dadurch gekennzeichnet, daß die einzuschmelzenden Gläser ungebrochen, gebrochen oder pulverisiert einem Extruder, welcher durch die kontinuierliche Zuführung der einzuschmelzenden Gläser auf seiner einen Seite und durch die ebenfalls kontinuierliche Abführung der Schmelze, Lösung, Emulsion oder des Gemisches auf seiner anderen Seite ein geschlossenes System bildet, zugegeben und auf- bzw. eingeschmolzen werden.

2. Verfahren nach Anspruch 1, dadurch gekennzeichnet, daß die Gläser mit Belastung in einem Extruder zu einer chemischen Reaktion gebracht und auf- bzw. eingeschmolzen werden.

3. Verfahren nach Anspruch 1, dadurch gekennzeichnet, daß in das Verfahren andere Substanzen zusätzlich eingegeben und mit eingeschmolzen werden.

4. Verfahren nach Anspruch 1, dadurch gekennzeichnet, daß bestimmte Materialien und Verunreinigungen gezielt als Treibmittel bei der Herstellung von Schaumglas zugeführt werden.

5. Verfahren nach Anspruch 1, dadurch gekennzeichnet, daß zusätzlich zu den einzuschmelzenden Gläsern bekannte zum Einschmelzen eingesetzte Grundstoffe wie Glaspulver bzw. Glasstücke, Mineralien, Mischsilikate, Glasbildner zugeführt werden.

6. Verfahren nach Anspruch 1, dadurch gekennzeichnet, daß radioaktive Materialien in Röntgenschutzgläser eingegossen werden.

7. Verfahren nach Anspruch 1, dadurch gekennzeichnet, daß toxische Stoffe bzw. andere Komponenten durch gezielte chemische Zusätze wie bspw. Oxidations- bzw. Reduktionsmittel oder Katalysatoren umgewandelt werden.
